# FASCICULE DE BREVET EUROPEEN

(11) **EP 2 629 964 B1**
(45) Date de publication et mention de la délivrance du brevet: **31.12.2014**
(21) Numéro de dépôt: 11832113.2
(22) Date de dépôt: 13.10.2011
(51) Int. Cl.: B29C 73/16, B60C 19/12, C08K 5/00, C08K 5/01, C08L 21/00

(54) **BANDAGE PNEUMATIQUE COMPRENANT UNE COUCHE AUTO-OBTURANTE A GRADIENT RADIAL DE FLUAGE**
REIFEN MIT EINER SELBSTDICHTUNGSSCHICHT MIT EINEM RADIALEN STRÖMUNGSGEFÄLLE
TYRE COMPRISING A SELF-SEALING LAYER HAVING A RADIAL FLOW GRADIENT

(30) Priorité: 18.10.2010 FR 1058488
(43) Date de publication de la demande: 28.08.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VOGE, Bozena, F-63040 Clermont-Ferrand Cedex 9 (FR); MERINO LOPEZ, José, F-63040 Clermont-Ferrand Cedex 9 (FR); AHOUANTO, Michel, F-63040 Clermont-Ferrand Cedex 9 (FR)
(74) Mandataire: Dequire, Philippe Jean-Marie Denis
(86) Numéro de dépôt international: PCT/FR2011/052390
(87) Numéro de publication internationale: WO 2012/052663

(56) Documents cités:
- WO-A1-03/101709
- WO-A1-2010/012413
- WO-A2-2010/012412
- FR-A1- 2 939 145

## Description

L'invention concerne le domaine des bandages pneumatiques et plus particulièrement celui des bandages pneumatiques munis de moyens d'auto-obturation d'une perforation dans le bandage pneumatique.

De manière générale, un bandage pneumatique comprend une couche interne d'étanchéité délimitant le volume interne du bandage pneumatique. Cette couche comprend généralement une gomme de type butyl connue pour être imperméable à l'air.

Lors de son utilisation, le bandage pneumatique peut subir une perforation suite à la pénétration d'un objet perforant dans le bandage pneumatique, par exemple un clou. Cette perforation entraîne la crevaison du bandage pneumatique.

Afin d'éviter la crevaison du bandage pneumatique, il a été proposé de disposer au contact de la couche interne d'étanchéité une couche supplémentaire d'un produit relativement souple et pouvant fluer facilement. Ainsi, lors d'une perforation, le produit de la couche supplémentaire, en raison de sa souplesse et de sa capacité à fluer facilement, pénètre dans la perforation et évite la crevaison du bandage pneumatique. Un tel produit présentant une relative souplesse et une capacité à fluer facilement est dit auto-obturant.

Toutefois, la mise au point du produit auto-obturant est relativement complexe. En effet, lorsque le produit est trop souple et/ou présente une capacité à fluer trop grande, le produit auto-obturant peut fluer sous l'effet de la force centrifuge lors de l'utilisation du bandage pneumatique. Ainsi, le produit flue axialement vers le centre du bandage pneumatique. Les parties axialement externes ou épaules du bandage pneumatique sont alors moins bien protégées. En outre, le produit peut fluer axialement vers le centre du bandage pneumatique même quand le bandage pneumatique est à l'arrêt, en particulier dans des conditions de hautes températures. De plus, si l'objet perforant est retiré du bandage pneumatique, le produit auto-obturant peut fluer par la perforation et s'échapper du bandage pneumatique. La fonction anti-crevaison n'est alors plus assurée. Enfin, le produit auto-obturant peut interagir chimiquement avec des intercalaires de stockage intermédiaire. Dans le cas où la couche de produit est assemblée sur un tambour de confection sur l'ébauche crue du bandage pneumatique, le produit auto-obturant peut également interagir avec le tambour de confection. Il peut aussi interagir notamment par collage avec la membrane de cuisson de la presse de vulcanisation ce qui provoque un encrassage de celle-ci et conduit à l'arrêt de l'installation de vulcanisation.

En outre, lorsque le produit est trop rigide et/ou présente une capacité à fluer trop petite, le produit ne flue pas suffisamment dans la perforation, notamment par temps froid.

L'invention a donc pour but de fournir une couche de produit auto-obturant efficace et compatible avec le procédé de fabrication du bandage pneumatique.

A cet effet, l'invention a pour objet un bandage pneumatique comprenant une couche interne d'étanchéité délimitant en partie le volume interne du bandage pneumatique, le bandage pneumatique comprenant une couche d'au moins un produit auto-obturant, dite couche auto-obturante, disposée radialement intérieurement par rapport à la couche interne d'étanchéité, la couche auto-obturante présentant un indicateur de résistance au fluage radialement décroissant vers l'extérieur du bandage pneumatique.

La couche de produit auto-obturant n'interagit pas avec les différents outils utilisés lors du procédé de fabrication. En effet, en raison de la décroissance radiale de l'indicateur, la partie qui est au contact des outils est celle qui flue le moins et qui présente le moins de risque d'interaction avec les outils, notamment par collage. En effet, en plus de moins fluer que la partie qui n'est pas en contact avec les outils, la partie au contact avec les outils présente un niveau de collant inférieur à la partie qui n'est pas en contact avec les outils.

En outre, la couche assure efficacement la fonction d'auto-obturation. En effet, la partie qui flue le plus comprend le produit qui pénètre en premier dans la perforation. Ainsi, cette partie assure correctement la fonction d'auto-obturation. De plus, les parties axialement externes ou épaules du bandage pneumatique sont protégées par la partie qui flue moins mais qui assure toutefois une fonction anti-crevaison suffisante.

La décroissance radiale d'un indicateur correspond à une diminution de l'indicateur lorsque l'on se déplace radialement dans la couche de produit auto-obturant de l'intérieur du bandage pneumatique vers l'extérieur du bandage pneumatique, c'est-à-dire lorsque l'on s'éloigne de l'axe de rotation du bandage pneumatique. Ainsi, une décroissance peut être continue, c'est-à-dire que l'indicateur décroît constamment lorsque l'on se déplace radialement dans la couche de produit auto-obturant. Une décroissance peut également être discontinue, c'est-à-dire que l'indicateur décroît par paliers lorsque l'on se déplace radialement dans la couche de produit auto-obturant.

L'indicateur de résistance au fluage est représentatif de la capacité du produit à résister à une déformation sous l'effet d'une contrainte pendant une certaine durée. Plus l'indicateur est faible, plus le produit peut fluer, plus l'indicateur est élevé, moins le produit peut fluer.

Dans la présente description, sauf indication expresse différente, tous les pourcentages (%) indiqués sont des % en masse. D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression «de a à b» signifie le domaine de valeurs allant de la borne « a » jusqu'à la borne « b » c'est-à-dire incluant les bornes strictes « a » et « b ».

Dans les compositions élastomère de la présente description, le sigle « pce » signifie parties en poids pour cent parties d'élastomère solide.

Avantageusement, chaque produit auto-obturant est une composition élastomère comportant au moins, à titre d'élastomère majoritaire (préférentiellement pour plus de 50 pce), un élastomère diénique, une résine hydrocarbonée, un plastifiant liquide dont la température de transition vitreuse est inférieure à -10 °C, de préférence-20°C, voire -30°C, et éventuellement une charge.

De préférence, le produit auto-obturant comprend :
- entre 20 et 90 pce de la résine hydrocarbonée ;
- au plus 60 pce du plastifiant liquide;
- au plus 60 pce de charges.

De préférence, le taux de plastifiant liquide de la couche auto-obturante est maximal dans une portion radialement extérieure de la couche auto-obturante et minimal dans une portion radialement intérieure de la couche auto-obturante au moins sur une portion axiale de la couche auto-obturante axialement centrée autour du plan médian du bandage pneumatique. En d'autres termes, la couche auto obturante présente un taux de plastifiant liquide radialement croissant vers l'extérieur du bandage pneumatique au moins sur une portion axiale de la couche auto-obturante axialement centrée autour du plan médian du bandage pneumatique.

La différence de taux est préférentiellement supérieure à 5 pce.

De préférence, le taux de charges de la couche auto-obturante est minimal dans une portion radialement extérieure de la couche auto-obturante et maximal dans une portion radialement intérieure de la couche auto-obturante au moins sur une portion axiale de la couche auto-obturante axialement centrée autour du plan médian du bandage pneumatique. En d'autres termes, la couche auto-obturante présente un taux de charges radialement décroissant vers l'extérieur du bandage pneumatique au moins sur une portion axiale de la couche auto-obturante axialement centrée autour du plan médian du bandage pneumatique.

Selon un autre mode de réalisation alternatif ou complémentaire, chaque produit auto-obturant comporte en outre un système de réticulation et le taux du système de réticulation de la couche auto-obturante est minimal dans une portion radialement extérieure de la couche auto-obturante et maximal dans une portion radialement intérieure de la couche auto-obturante au moins sur une portion axiale de la couche auto-obturante axialement centrée autour du plan médian du bandage pneumatique. En d'autres termes, la couche auto-obturante présente un taux du système de réticulation radialement décroissant vers l'extérieur du bandage pneumatique au moins sur une portion axiale de la couche auto-obturante axialement centrée autour du plan médian du bandage pneumatique.

Dans un mode de réalisation, la couche auto-obturante comprend des première et deuxième couches respectivement de premier et deuxième produits auto-obturant distincts.

Selon d'autres caractéristiques du bandage pneumatique selon l'invention, la première couche est disposée radialement de façon interne par rapport à la deuxième couche et le premier produit auto-obturant présente un indicateur de résistance au fluage supérieur à un indicateur de résistance au fluage du deuxième produit auto-obturant. Ainsi, la première couche délimite au moins en partie le volume interne du bandage pneumatique.

Avantageusement, la première couche s'étend axialement extérieurement au-delà de la deuxième couche, c'est-à-dire que la première couche recouvre entièrement la deuxième couche. La deuxième couche n'est donc pas visible et n'est pas au contact de l'air. Le produit de la première couche présentant un indicateur de résistance au fluage plus élevé que le produit de la deuxième couche, le produit de la deuxième couche ne peut fluer vers le centre du bandage pneumatique car il est piégé dans une enveloppe relativement rigide formée par la première couche et la couche d'étanchéité.

Avantageusement, chacun des premier et deuxième produits auto-obturant comprend à titre d'élastomère majoritaire un élastomère diénique, une résine hydrocarbonée, un plastifiant liquide dont la température de transition vitreuse est inférieure à -10 °C, de préférence -20°C, voire -30°C et éventuellement une charge.

De préférence, le premier produit auto-obturant comprend:
- entre 20 et 70 pce de la résine hydrocarbonée ;
- au plus 20 pce du plastifiant liquide, de préférence au plus 2 pce du plastifiant liquide;
- au plus 60 pce de charges.

De préférence, le deuxième produit auto-obturant comprend:
- entre 30 et 90 pce de la résine hydrocarbonée ;
- au plus 60 pce du plastifiant liquide;
- au plus 30 pce de charges.

La première couche recouvre directement la deuxième couche. En d'autres termes, la première couche est au contact de la deuxième couche. En variante, une ou plusieurs couches intermédiaires sont intercalées entre les première et deuxième couches.

La première couche comprend deux bords d'extrémité axiale au contact de la couche interne d'étanchéité. La deuxième couche comprend deux bords d'extrémité axiale au contact de la couche interne d'étanchéité. Le risque de décollement des première et deuxième couches est ainsi supprimé.

La deuxième couche recouvre directement la couche interne d'étanchéité. En d'autres termes, la deuxième couche est au contact de la couche interne d'étanchéité. En variante, une ou plusieurs couches intermédiaires sont intercalées entre la deuxième couche et la couche interne d'étanchéité.

Dans un mode de réalisation, l'épaisseur de la première couche est axialement variable. De préférence l'épaisseur d'une portion d'extrémité axiale de la première couche est supérieure à l'épaisseur d'une portion axialement centrale de la première couche. Ainsi, même si le produit de la deuxième couche flue légèrement, les parties axialement externes ou épaules du bandage pneumatique sont protégées contre la crevaison par une épaisseur suffisante de la première couche.

Dans un autre mode de réalisation, l'épaisseur de la deuxième couche est axialement variable. De préférence l'épaisseur d'une portion d'extrémité axiale de la deuxième couche est inférieure à l'épaisseur d'une portion axialement centrale de la deuxième couche. Le produit de la deuxième couche présentant une résistance au fluage relativement plus faible, cela limitera son fluage axial vers le centre du bandage pneumatique.

Dans un mode de réalisation, dans la partie centrale du bandage pneumatique, l'épaisseur de la première couche est inférieure à l'épaisseur de la deuxième couche. L'efficacité anti-crevaison de la deuxième couche étant supérieure à celle de la première couche, on optimise ainsi la performance d'auto-obturation du bandage pneumatique. De préférence, l'épaisseur de la seconde couche est supérieure au double de l'épaisseur de la première couche sur au moins 50% de la dimension axiale de la deuxième couche.

L'indicateur de résistance au fluage peut être une mesure de consistance Mooney, réalisée à 60°C avec un rotor de type L.

De préférence, l'amplitude de variation de l'indicateur de résistance au fluage dans la couche auto-obturante est comprise entre 3 et 25 unités Mooney (UM), et très préférentiellement comprise entre 5 et 20 unités Mooney (UM).

En dessous de 3 UM, l'augmentation de résistance au fluage de la couche auto-obturante disposée aux épaules n'est plus suffisante pour garantir une résistance suffisante au fluage et au-delà de 25 unités UM, c'est la performance anti-crevaison qui n'est plus assurée.

Selon d'autres caractéristiques optionnelles du bandage pneumatique selon l'invention :
- Le taux des charges du premier produit auto-obturant est supérieur ou égal au taux des charges du deuxième produit obturant ;
- Le taux du plastifiant liquide du premier produit auto-obturant est inférieur au taux du plastifiant liquide du deuxième produit auto-obturant ;
- Les produits comportent en outre un système de réticulation de l'élastomère diénique et le taux du système de réticulation du premier produit auto-obturant est supérieur ou égal au taux du système de réticulation du deuxième produit auto-obturant

Les caractéristiques relatives aux taux de charges, du plastifiant liquide et du système de réticulation des premier et deuxième produits auto-obturant permettent, de façon isolée ou en synergie, de rendre le premier produit auto-obturant plus résistant au fluage c'est-à-dire moins fluant que le deuxième produit auto-obturant mais aussi de diminuer le niveau de collant du premier produit auto-obturant par rapport au niveau de collant du deuxième produit auto-obturant.

L'élastomère diénique est de type saturé ou insaturé. On entend par élastomère diénique insaturé un élastomère diénique issu au moins en partie de monomères diènes conjugués et ayant un taux d'unités issus de diènes conjugués qui est supérieur à 30% (% en moles), de préférence 50%. Un tel élastomère diénique est préférentiellement choisi dans le groupe constitué par les polybutadiènes (BR), le caoutchouc naturel (NR), les polyisoprènes de synthèse (IR), les copolymères de butadiènes, les copolymères d'isoprène et les mélanges de tels élastomères. L'élastomère diénique insaturé est plus avantageusement un élastomère isoprénique, de préférence choisi dans le groupe constitué par le caoutchouc naturel, les polyisoprènes de synthèse et les mélanges de tels élastomères.

La dénomination "résine" est réservée dans la présente demande, par définition connue de l'homme du métier, à un composé qui est solide à température ambiante (23°C), par opposition à un composé plastifiant liquide tel qu'une huile.

La résine hydrocarbonée est choisie dans le groupe constitué par les résines d'homopolymère ou copolymère de cyclopentadiène (CPD) ou dicyclopentadiène (DCPD), les résines d'homopolymère ou copolymère terpène, les résines d'homopolymère ou copolymère de coupe C5, et les mélanges de ces résines. Parmi les résines copolymères ci-dessus, la résine hydrocarbonée est avantageusement choisie dans le groupe constitué par les résines de copolymère CPD/vinylaromatique, les résines de copolymère DCPD/vinylaromatique, les résines de copolymère CPD/terpène, les résines de copolymère DCPD/terpène, les résines de copolymère CPD/coupe C5, les résines de copolymère DCPD/coupe C5, les résines de copolymère terpène/vinylaromatique, les résines de copolymère coupe C5/vinylaromatique et les mélanges de ces résines.

L'agent plastifiant liquide (à 23°C) dit à basse Tg (Température de transition vitreuse) a pour fonction de ramollir le produit auto-obturant en diluant l'élastomère diénique et la résine hydrocarbonée, améliorant en particulier les performances d'auto-obturation à froid.

L'agent plastifiant est choisi dans le groupe constitué par les élastomères liquides, les huiles polyoléfiniques, les huiles naphténiques, les huiles paraffiniques, les huiles DAE (Distillate Aromatic Extracts), les huiles MES (Medium Extracted Extracts), les huiles TDAE (Treated Distillate Aromatic Extracts), les huiles minérales, les huiles végétales, les plastifiants éthers, les plastifiants phosphates, les plastifiants sulfonates et les mélanges de ces composés. Préférentiellement, le plastifiant liquide est choisi dans le groupe constitué par les élastomères liquides, les huiles polyoléfiniques, les huiles végétales et les mélanges de ces composés. Très préférentiellement, le plastifiant liquide est choisi dans le groupe de polybutadiènes liquides, des polyisoprènes liquides, les huiles végétales et les mélanges de ces composés.

Les charges sont du type renforçantes, non renforçantes ou inertes et ont pour fonction de donner une tenue mécanique minimale au produit auto-obturant. Les charges sont par exemple des nanoparticules de noir de carbone ou des charges inorganiques renforçantes ou un mélange de ces deux types de charge. Les charges non renforçantes peuvent être des microparticules de carbonates de calcium naturels (craie) ou synthétiques, de silicates synthétiques ou naturels (tels que kaolin, talc, mica) de silices broyées, oxydes de titane, alumines ou encore aluminosilicates.

Divers additifs peuvent également être ajoutés, de préférence dans une quantité inférieure à 20 pce, plus préférentiellement à 15 pce. Les additifs comprennent des agents de protection tels que des anti-UV, anti-oxydants ou anti-ozonants, divers autres stabilisants, des agents colorants avantageusement utilisables pour la coloration de chaque produit auto-obturant.

Chaque produit auto-obturant peut aussi comprendre optionnellement un système de réticulation de l'élastomère diénique. Ce système est du type de vulcanisation, en l'espèce à base de souffre.

L'invention a également pour objet un procédé de fabrication d'une ébauche crue d'un bandage pneumatique dans lequel:
- on dépose une couche d'au moins un produit auto-obturant, dite couche auto-obturante, sur une surface d'un tambour de confection, la couche auto-obturante présentant un indicateur de résistance au fluage radialement croissant vers l'extérieur de l'ébauche,
- on dépose une couche interne d'étanchéité au contact de la couche auto-obturante.

Dans un mode de réalisation:
- on dépose une première couche d'un premier produit auto-obturant sur la surface du tambour de confection,
- on dépose une deuxième couche d'un deuxième produit auto-obturant distinct du premier produit auto-obturant sur la première couche, et
- on dépose la couche interne d'étanchéité au contact de la deuxième couche.

L'invention sera mieux comprise à la lecture de la description qui va suivre, donnée uniquement à titre d'exemple non limitatif et faite en se référant aux dessins dans lesquels :
- la figure 1 illustre une vue en coupe radiale d'un bandage pneumatique selon un premier mode de réalisation de l'invention;
- la figure 2 illustre une vue en coupe radiale d'un bandage pneumatique selon un deuxième mode de réalisation de l'invention;
- la figure 3 illustre une vue en coupe radiale d'un bandage pneumatique selon un troisième mode de réalisation de l'invention;
- la figure 4 illustre une vue en coupe radiale d'un bandage pneumatique selon un quatrième mode de réalisation de l'invention.

Sur les figures, on a représenté des axes X, Y, Z orthogonaux entre eux correspondant aux orientations habituelles radiale (X), axiale (Y) et circonférentielle (Z) d'un bandage pneumatique.

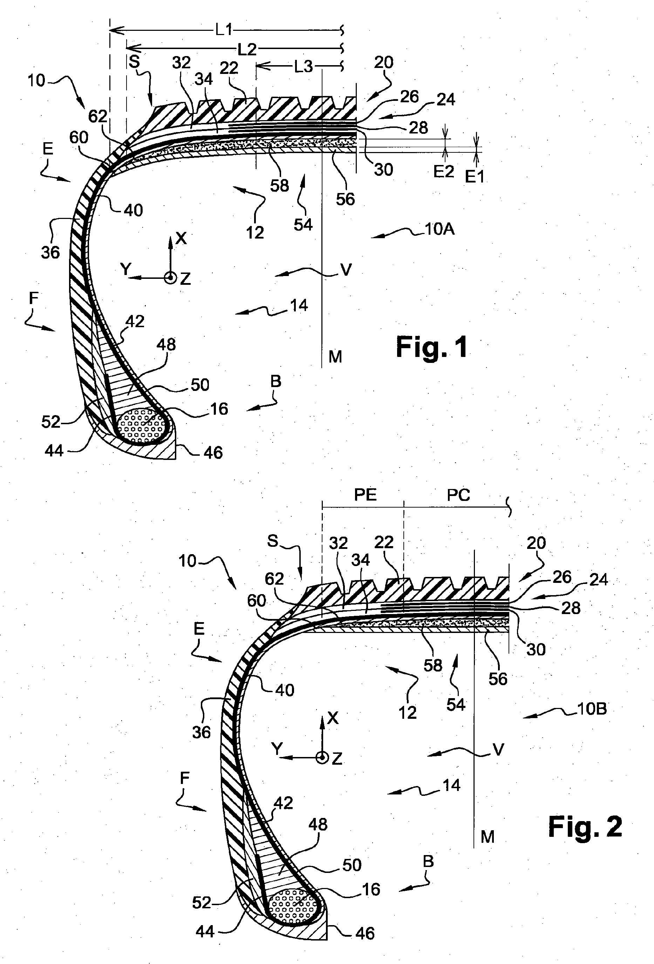

On a représenté sur la figure 1 un bandage pneumatique selon un premier mode de réalisation de l'invention désigné par la référence générale 10A.

En l'espèce, le bandage pneumatique 10A est destiné à être monté sur une roue de véhicule automobile de type tourisme.

De façon classique, le bandage pneumatique 10A comprend un sommet S prolongé par deux épaules E, deux flancs F et deux bourrelets B. Un seul flanc F, une seule épaule E et un seul bourrelet B sont représentés sur les figures.

Deux tringles 16 (une seule est représentée) sont noyées dans les bourrelets B. Les deux tringles 16 sont agencées symétriquement par rapport à un plan radial médian M du bandage pneumatique.

Chaque tringle 16 est de révolution autour d'un axe de référence. Cet axe de référence, sensiblement parallèle à la direction Y, est sensiblement confondu avec un axe de révolution du bandage pneumatique.

Le sommet S comprend une bande de roulement 20, munie de sculptures 22, ainsi qu'une armature 24. Cette armature 24 comprend des nappes de renforts métalliques ou textiles 26, 28 et 30 noyées dans des masses de gomme 32 et 34.

Une masse de gomme 36 s'étend radialement du sommet jusqu'au niveau de la tringle 16 du bourrelet B en délimitant une surface extérieure 38 de l'épaule E, du flanc F et du bourrelet B.

Le bandage pneumatique 10A comprend également une couche de gomme intérieure d'étanchéité 40 ainsi qu'une nappe carcasse 42. La couche 40 délimite au moins en partie le volume interne V du bandage pneumatique 10A et est réalisée dans une gomme de type butyl. La couche 40 et la nappe 42 sont de forme générale toroïdale et sont toutes deux coaxiales aux tringles 16. Les couche 40 et nappe 42 s'étendent entre les deux tringles annulaires 16 du bandage pneumatique 10A en passant par le sommet S.

Dans le bourrelet B du bandage pneumatique 10A, la nappe carcasse 42 comprend une partie repliée 44 autour de la tringle 16. Le bourrelet B comprend également une masse de gomme de protection 46 annulaire destinée à permettre, en partie, l'accrochage radial et axial du bandage pneumatique 10A sur une jante.

Le bourrelet B du bandage pneumatique 10 comprend également une masse de gomme 48 pour le bourrage d'un volume compris entre la partie repliée 44 de la nappe carcasse 42 et une partie 50 de la nappe carcasse 42 en vis-à-vis axialement de la partie repliée 44. Le bourrelet B comprend aussi une masse de gomme 52. Cette masse 52 forme une masse de bourrage recouvrant, au moins partiellement, la partie repliée 44 de la nappe carcasse 42. La masse 52 est séparée localement de la masse 48 par la partie repliée 44.

Le bandage pneumatique 10A comprend également une couche 54 d'au moins un produit auto-obturant disposée radialement de façon interne par rapport à la couche de gomme d'étanchéité 40. En l'espèce, la couche 54 est appliquée au contact de la couche interne d'étanchéité 40. La couche 54 délimite au moins en partie le volume interne V du bandage pneumatique.

La couche 54 comprend une première couche 56 d'un premier produit auto-obturant O1. La couche 54 comprend également une deuxième couche 58 d'un deuxième produit auto-obturant 02 distinct du premier produit O1. La première couche 56 est disposée radialement intérieurement par rapport à la deuxième couche 58. En l'espèce, la première couche 56 est au contact de la deuxième couche 58.

Chacun des premier et deuxième produits auto-obturant 01, 02 comprend, à titre d'élastomère majoritaire, un élastomère diénique saturé, une résine hydrocarbonée, un plastifiant liquide dont la température de transition vitreuse est inférieure à -10 °C et éventuellement une charge et un système de réticulation.

Chaque produit auto-obturant O1, 02 comprend entre 20 et 90 parties en poids pour cent parties d'élastomère solide de la résine hydrocarbonée, au plus 60 parties en poids pour cent parties d'élastomère solide du plastifiant liquide et au plus 60 parties en poids pour cent parties d'élastomère solide de charges.

Le premier produit auto-obturant O1 comprend entre 20 et 70 pce de la résine hydrocarbonée, au plus 20 pce du plastifiant liquide et au plus 60 pce des charges. En l'espèce, le premier produit auto-obturant O1 comprend avantageusement au plus 2 pce du plastifiant liquide. De préférence, l'élastomère diénique est saturé.

Le deuxième produit auto-obturant 02 comprend entre 30 et 90 pce de la résine hydrocarbonée, au plus 60 pce du plastifiant liquide et au plus 30 pce des charges. De préférence, l'élastomère diénique est insaturé.

Le taux de charges de la couche auto-obturante 54 est minimal dans la portion radialement extérieure 58 de la couche auto-obturante 54 et maximal dans la portion radialement intérieure 56 de la couche auto-obturante 54 au moins sur une portion axiale L3 de la couche auto-obturante 54 axialement centrée autour du plan médian M du bandage pneumatique 10A. Ici, le taux des charges du premier produit auto-obturant O1 est supérieur ou égal au taux des charges du deuxième produit auto-obturant 02 sur la portion axiale L3 si bien que la couche auto-obturante 54 présente un taux de charges radialement décroissant vers l'extérieur du bandage pneumatique au moins sur la portion axiale L3.

Le taux de plastifiant liquide de la couche auto-obturante 54 est maximal dans la portion radialement extérieure 58 de la couche auto-obturante 54 et minimal dans la portion radialement 56 intérieure de la couche auto-obturante 54 au moins sur la portion axiale L3. Ici, le taux du plastifiant liquide du premier produit auto-obturant O1 est inférieur au taux du plastifiant liquide du deuxième produit auto-obturant 02 sur la portion axiale L3 si bien que la couche 54 présente un taux de plastifiant liquide radialement croissant vers l'extérieur du bandage pneumatique au moins sur la portion axiale L3. La variation radiale du taux de plastifiant liquide dans la couche auto-obturante 54 est supérieure à 5 parties pour cent parties d'élastomère solide.

Le taux du système de réticulation de la couche auto-obturante 54 est minimal dans une portion radialement extérieure 58 de la couche auto-obturante 54 et maximal dans une portion radialement intérieure 56 de la couche auto-obturante 54 au moins sur la portion axiale L3. Ici, le taux du système de réticulation du premier produit auto-obturant O1 est supérieur ou égal au taux du système de réticulation du deuxième produit auto-obturant 02 sur la portion axiale L3 si bien que la couche auto obturante 54 présente un taux du système de réticulation radialement décroissant vers l'extérieur du bandage pneumatique au moins sur la portion axiale L3.

Les première et deuxième couches 56, 58 recouvrent directement respectivement la deuxième couche 58 et la couche interne d'étanchéité 40. La dimension axiale, ou largeur L1, de la première couche 56 est supérieure à la dimension axiale, ou largeur L2, de la deuxième couche 58. En l'espèce, L1 > L2 + 2 cm. Ainsi, la première couche 56 recouvre entièrement la deuxième couche 58. La première couche 56 délimite en partie le volume interne du bandage pneumatique 10A et comprend deux bords d'extrémité axiale 60 au contact de la couche 40. La deuxième couche 58 comprend deux bords d'extrémité axiale 62 également au contact de la couche 40.

Dans ce premier mode de réalisation, l'épaisseur E1 de la première couche 56 est inférieure à l'épaisseur E2 de la deuxième couche 58. En l'espèce, E1 < 2 mm et de préférence E1 < 1 mm. De préférence, l'épaisseur E1 de la première couche 56 est inférieure à l'épaisseur E2 sur une portion axialement centrale du bandage pneumatique 10A et plus préférentiellement sur au moins 50% de la dimension axiale de la deuxième couche 58. En variante, E1=E2.

La couche 54 présente un indicateur I de résistance au fluage radialement décroissant en s'éloignant de l'axe de rotation du bandage pneumatique. La première couche 56 présente un indicateur Il de résistance au fluage supérieur à un indicateur 12 de résistance au fluage de la deuxième couche 58. En l'espèce, chaque indicateur de résistance au fluage I, I1, I2 est une valeur d'une mesure de Mooney réalisée avec un rotor de type L à 60°C. Une mesure de Mooney a pour unité l'unité Mooney de sigle UM. La mesure de Mooney est réalisée en utilisant un consistomètre selon la norme ASTM D 1646-99. La mesure de Mooney se fait selon le principe suivant: le mélange généralement cru est moulé dans une enceinte cylindrique chauffée à une température donnée, usuellement 100°C et ici 60°C. Après une minute de préchauffage, le rotor tourne au sein de l'éprouvette à 2 tours par minute et on mesure le couple utile pour entretenir ce mouvement après 4 minutes de rotation.

De préférence, la variation de l'indicateur I de résistance au fluage est comprise entre 3 et 25 UM et encore préférentiellement entre 5 et 20 UM.

II est à noter que les produits auto-obturants décrits présentent un taux de réticulation après la vulcanisation du bandage pneumatique très faible et tel qu'il est toujours possible de caractériser ces produits par leur UM.

On va maintenant décrire un procédé de fabrication d'une ébauche crue du bandage pneumatique 10A.

On utilise un tambour de confection sensiblement de révolution autour d'un axe confondu avec l'axe de l'ébauche qui est également l'axe du futur bandage pneumatique 10A. Le tambour comporte une surface externe de dépose des différentes couches de produit.

On dépose la première couche 56 sur la surface de dépose du tambour de confection, puis on dépose la deuxième couche 58 sur la première couche. Ensuite, on dépose la couche interne d'étanchéité 40 au contact de la deuxième couche 58. Enfin, on dépose les couches et nappes suivantes de façon à fabriquer une ébauche permettant d'obtenir le bandage pneumatique 10A de la figure 1.

On a représenté sur la figure 2 un bandage pneumatique 10B selon un deuxième mode de réalisation de l'invention. Les éléments analogues à ceux représentés sur la figure précédente sont désignés par des références identiques.

A la différence du premier mode de réalisation, l'épaisseur E2 de la deuxième couche 58 est axialement variable. La deuxième couche 58 comprend une portion axialement centrale PC reliant entre elles deux portions d'extrémité axiale PE délimitées par les bords d'extrémité axiale 62. L'épaisseur de chaque portion d'extrémité axiale PE est inférieure à l'épaisseur de la portion axialement centrale PC. En l'espèce, l'épaisseur E2 de la deuxième couche 58 est minimale à chaque bord d'extrémité axiale 62. Ce mode de réalisation a l'avantage de minimiser les risques de fluage en service de la seconde couche 58.

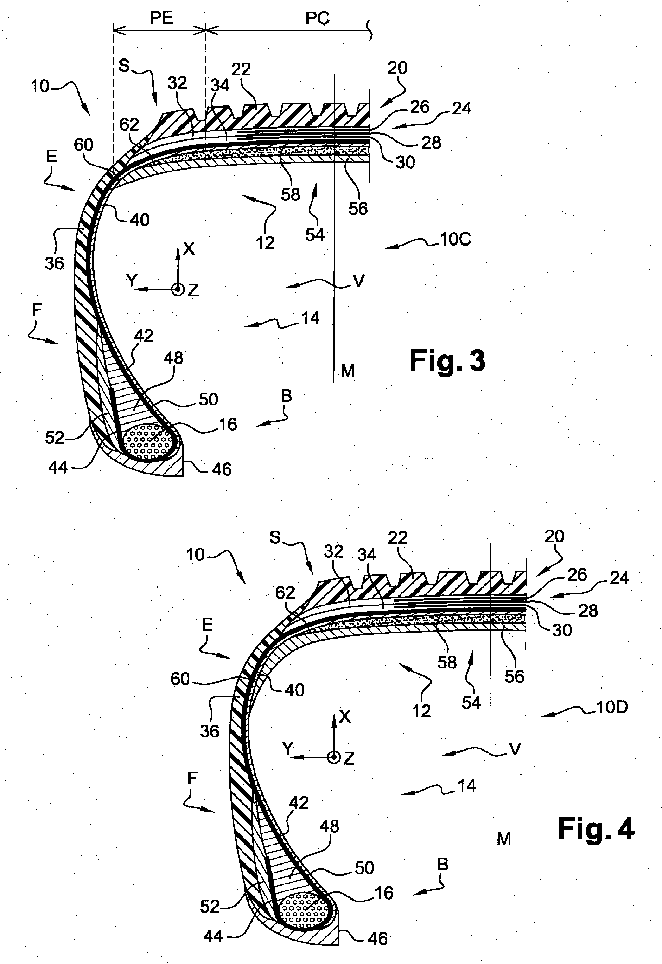

On a représenté sur la figure 3 un bandage pneumatique 10C selon un troisième mode de réalisation de l'invention. Les éléments analogues à ceux représentés sur les figures précédentes sont désignés par des références identiques.

A la différence du premier mode de réalisation, l'épaisseur E1 de la première couche 56 est axialement variable. La première couche 56 comprend une portion axialement centrale PC reliant entre elles deux portions d'extrémité axiale PE délimitées par les bords d'extrémité axiale 60. L'épaisseur de chaque portion d'extrémité axiale PE est supérieure à l'épaisseur de la portion axialement centrale PC. En l'espèce, l'épaisseur E1 de la première couche est maximale sensiblement en regard de chaque bord d'extrémité axiale 62 de la seconde couche 58. Ce mode de réalisation permet d'assurer une bonne résistance à la crevaison sur l'ensemble du bloc sommet du bandage pneumatique.

On a représenté sur la figure 4 un bandage pneumatique 10D selon un quatrième mode de réalisation de l'invention. Les éléments analogues à ceux représentés sur les figures précédentes sont désignés par des références identiques.

A la différence du troisième mode de réalisation, la première couche 56 est au contact de la couche 40 le long de l'épaule E et d'une portion du flanc F. En d'autres termes, la largeur L1 de la première couche 56 du bandage pneumatique 10D selon le quatrième mode de réalisation est supérieure à la largueur L1 de la première couche 56 du bandage pneumatique 10C selon le troisième mode de réalisation. Ce mode de réalisation a l'avantage de protéger le bandage pneumatique 10D contre une crevaison au niveau des épaules E et au niveau des parties adjacentes des flancs F.

L'invention ne se limite pas aux modes de réalisation précédemment décrits.

En effet, les caractéristiques des différents modes de réalisation pourront être indifféremment combinées lorsque celles-ci sont compatibles.

De plus, on peut augmenter le nombre de couches de produits auto-obturants distincts pour rendre plus progressif la variation de la résistance au fluage de la couche auto-obturante.

## Revendications

1. Bandage pneumatique (10A-10D) comprenant une couche interne (40) d'étanchéité délimitant en partie le volume interne (V) du bandage pneumatique, **caractérisé en ce qu'**il comprend une couche (54) d'au moins un produit auto-obturant (O1, 02), dite couche auto-obturante, disposée radialement intérieurement par rapport à la couche interne d'étanchéité (40), la couche (54) auto-obturante présentant un indicateur (I1, I2) de résistance au fluage radialement décroissant vers l'extérieur du bandage pneumatique (10A-10D).

2. Bandage pneumatique (10A-10D) selon la revendication 1, dans lequel chaque produit auto-obturant (O1, 02) comprend au moins un élastomère diénique à titre d'élastomère majoritaire, entre 20 et 90 parties en poids pour cent parties d'élastomère solide d'une résine hydrocarbonée, au plus 60 parties en poids pour cent parties d'élastomère solide d'un plastifiant liquide dont la température de transition vitreuse est inférieure à -10°C et au plus 60 parties en poids pour cent parties d'élastomère solide de charges.

3. Bandage pneumatique (10A-10D) selon la revendication 2, dans lequel le taux de plastifiant liquide de la couche auto-obturante (54) est maximal dans une portion radialement extérieure (58) de la couche auto-obturante (54) et minimal dans une portion radialement intérieure (56) de la couche auto-obturante (54) au moins sur une portion axiale (L3) de la couche auto-obturante (54) axialement centrée autour du plan médian (M) du bandage pneumatique (10A-10D).

4. Bandage pneumatique (10A-10D) selon la revendication 3, dans lequel la variation radiale du taux de plastifiant liquide dans la couche auto-obturante (54) est supérieure à 5 parties pour cent parties d'élastomère solide.

5. Bandage pneumatique (10A-10D) selon l'une quelconque des revendications 2 à 4, dans lequel le taux de charges de la couche auto-obturante (54) est minimal dans une portion radialement extérieure (58) de la couche auto-obturante (54) et maximal dans une portion radialement intérieure (56) de la couche auto-obturante (54) au moins sur une portion axiale (L3) de la couche auto-obturante (54) axialement centrée autour du plan médian (M) du bandage pneumatique (10A-10D).

6. Bandage pneumatique (10A-10D) selon l'une quelconque des revendications précédentes, dans lequel chaque produit auto-obturant (O1, 02) comporte en outre un système de réticulation et dans lequel le taux du système de réticulation de la couche auto-obturante (54) est minimal dans une portion radialement extérieure (58) de la couche auto-obturante (54) et maximal dans une portion radialement intérieure (56) de la couche auto-obturante (54) au moins sur une portion axiale (L3) de la couche auto-obturante (54) axialement centrée autour du plan médian (M) du bandage pneumatique (10A-10D).

7. Bandage pneumatique (10A-10D) selon l'une quelconque des revendications précédentes, dans lequel la couche (54) auto-obturante comprend des première et deuxième couches (56, 58) respectivement de premier et deuxième produits auto-obturant (O1, 02) distincts, dans lequel la première couche (56) est disposée radialement intérieurement par rapport à la deuxième couche (58) et dans lequel le premier produit auto-obturant (O1) présente un indicateur de résistance au fluage (I1) supérieur à un indicateur de résistance au fluage (I2) du deuxième produit auto-obturant (02).

8. Bandage pneumatique (10A-10D) selon la revendication précédente, dans lequel la première couche (56) s'étend axialement extérieurement au-delà de la deuxième couche (58).

9. Bandage pneumatique (10A-10D) selon la revendication 7 ou 8, dans lequel le premier produit auto-obturant (O1) comprend entre 20 et 70 parties en poids d'une résine hydrocarbonée pour cent parties d'élastomère solide, au plus 20 parties en poids d'un plastifiant liquide pour cent parties d'élastomère solide et au plus 60 parties en poids de charges pour cent parties d'élastomère solide.

10. Bandage pneumatique (10A-10D) selon l'une quelconque des revendications 7 à 9, dans lequel le deuxième produit auto-obturant (02) comprend entre 30 et 90 parties en poids d'une résine hydrocarbonée pour cent parties d'élastomère solide, au plus 60 parties en poids d'un plastifiant liquide pour cent parties d'élastomère solide et au plus 30 parties en poids de charges pour cent parties d'élastomère solide.

11. Bandage pneumatique (10A-10D) selon l'une quelconque des revendications 7 à 10, dans laquelle l'épaisseur (E1) de la première couche est axialement variable et, de préférence l'épaisseur d'une portion d'extrémité axiale (PE) de la première couche (56) est supérieure à l'épaisseur d'une portion axialement centrale (PC) de la première couche (56).

12. Bandage pneumatique (10A-10D) selon l'une quelconque des revendications 7 à 11, dans laquelle l'épaisseur (E2) de la deuxième couche est axialement variable et, de préférence l'épaisseur d'une portion d'extrémité axiale (PE) de la deuxième couche (58) est inférieure à l'épaisseur d'une portion axialement centrale (PC) de la deuxième couche (58).

13. Bandage pneumatique (10A-10D) selon l'une quelconque des revendications 7 à 12, dans lequel l'épaisseur (E1) de la première couche (56) est inférieure ou égale à l'épaisseur (E2) de la deuxième couche (58), de préférence sur une portion axialement centrale du bandage pneumatique et plus préférentiellement sur au moins 50 % de la dimension axiale de la deuxième couche (58).

14. Bandage pneumatique (10A-10D) selon l'une quelconque des revendications précédentes, dans lequel l'indicateur de résistance au fluage est une mesure de consistance Mooney, réalisée avec un rotor de type L à 60°C, et dans lequel l'amplitude de variation de l'indicateur (I1, I2) de résistance au fluage dans la couche auto-obturante (54) est compris entre 3 et 25 unités Mooney (UM).

15. Bandage pneumatique (10A-10D) selon la revendication 14, dans lequel l'amplitude de variation de l'indicateur (11, 12) de résistance au fluage dans la couche auto-obturante (54) est compris entre 5 et 20 unités Mooney (UM).

16. Procédé de fabrication d'une ébauche crue d'un bandage pneumatique (10A-10D), **caractérisé en ce que**:
- on dépose une couche (54) d'au moins un produit auto-obturant (O1, 02), dite couche auto-obturante, sur une surface d'un tambour de confection, la couche (54) auto-obturante présentant un indicateur (I1, I2) de résistance au fluage radialement décroissant vers l'extérieur de l'ébauche,
- on dépose une couche interne d'étanchéité (40) au contact de la couche (54) auto-obturante (O1, 02).

17. Procédé selon la revendication précédente, dans lequel :
- on dépose une première couche (56) d'un premier produit auto-obturant (O1) sur la surface du tambour de confection,
- on dépose une deuxième couche (58) d'un deuxième produit auto-obturant (02) distinct du premier produit auto-obturant sur la première couche, et
- on dépose la couche interne d'étanchéité (40) au contact de la deuxième couche (58).

## Patentansprüche

1. Luftreifen (10A-10D) mit einer inneren Abdichtungsschicht (40), die teilweise das innere Volumen (V) des Luftreifens abgrenzt, **dadurch gekennzeichnet, dass** er eine Schicht (54) mindestens eines selbstabdichtenden Produkts (O1, 02) aufweist, die sogenannte selbstabdichtende Schicht, die radial innen in Bezug zu der inneren Abdichtungsschicht (40) angeordnet ist, wobei die selbstabdichtende Schicht (54) einen Indikator (I1, 12) für die nach außen radial abnehmende Kriechbeständigkeit des Luftreifens (10A-10D) aufweist.

2. Luftreifen (10A-10D) nach Anspruch 1, wobei jedes selbstabdichtende Produkt (O1, 02) mindestens ein Dienelastomer als Hauptelastomer, zwischen 20 und 90 Gewichtsteile pro hundert Teile festem Elastomer eines Kohlenwasserstoffharzes aufweist, höchstens 60 Gewichtsteile pro hundert Teile festem Elastomer eines flüssigen Weichmachers, dessen Glasübergangstemperatur unter -10°C liegt, und höchstens 60 Gewichtsteile pro hundert Teile festem Elastomer an Füllstoffen.

3. Luftreifen (10A-10D) nach Anspruch 2, wobei der Anteil an flüssigem Weichmacher der selbstabdichtenden Schicht (54) in einem radial äußeren Abschnitt (58) der selbstabdichtenden Schicht (54) am höchsten ist und in einem radial inneren Abschnitt (56) der selbstabdichtenden Schicht (54) am geringsten ist, mindestens in einem axialen Abschnitt (L3) der selbstabdichtenden Schicht (54), die axial um die Mittelebene (M) des Luftreifens (10A-10D) zentriert ist.

4. Luftreifen (10A-10D) nach Anspruch 3, wobei die radiale Schwankung des Anteils an flüssigem Weichmacher in der selbstabdichtenden Schicht (54) größer ist als 5 Teile pro hundert Teile festem Elastomer.

5. Luftreifen (10A-10D) nach einem der Ansprüche 2-4, wobei der Anteil an Füllstoffen der selbstabdichtenden Schicht (54) in einem radial äußeren Abschnitt (58) der selbstabdichtenden Schicht (54) am geringsten ist und in einem radial inneren Abschnitt (56) der selbstabdichtenden Schicht (54) am höchsten ist, mindestens in einem axialen Abschnitt (L3) der selbstabdichtenden Schicht (54), die axial um die Mittelebene (M) des Luftreifens (10A-10D) zentriert ist.

6. Luftreifen (10A-10D) nach einem der vorhergehenden Ansprüche, wobei jedes selbstabdichtende Produkt (O1, 02) ferner ein Vernetzungssystem aufweist und wobei der Anteil des Vernetzungssystems der selbstabdichtenden Schicht (54) in einem radial äußeren Abschnitt (58) der selbstabdichtenden Schicht (54) am geringsten ist und in einem radial inneren Abschnitt (56) der selbstabdichtenden Schicht (54) am höchsten ist, mindestens in einem axialen Abschnitt (L3) der selbstabdichtenden Schicht (54), die axial um die Mittelebene (M) des Luftreifens (10A-10D) zentriert ist.

7. Luftreifen (10A-10D) nach einem der vorhergehenden Ansprüche, wobei die selbstabdichtende Schicht (54) eine erste und eine zweite Schicht (56, 58) des ersten beziehungsweise des zweiten selbstabdichtenden Produkts (O1, 02) aufweist, wobei die erste Schicht (56) radial innen in Bezug auf die zweite Schicht (58) angeordnet ist und wobei das erste selbstabdichtende Produkt (O1) einen Indikator für die Kriechbeständigkeit (I1) aufweist, der höher ist als der Indikator für die Kriechbeständigkeit (12) des zweiten selbstabdichtenden Produkts (02).

8. Luftreifen (10A-10D) nach dem vorhergehenden Anspruch, wobei die erste Schicht (56) sich axial außen über die zweite Schicht (58) hinweg erstreckt.

9. Luftreifen (10A-10D) nach Anspruch 7 oder 8, wobei das erste selbstabdichtende Produkt (O1) zwischen 20 und 70 Gewichtsteile eines Kohlenwasserstoffharzes pro hundert Teile festem Elastomer aufweist, höchstens 20 Gewichtsteile eines flüssigen Weichmachers pro hundert Teile festem Elastomer und höchstens 60 Gewichtsteile Füllstoffe pro hundert Teile festem Elastomer.

10. Luftreifen (10A-10D) nach einem der Ansprüche 7 bis 9, wobei das zweite selbstabdichtende Produkt (02) zwischen 30 und 90 Gewichtsteile eines Kohlenwasserstoffharzes Kohlenwasserstoffharzes pro hundert Teile festem Elastomer aufweist, höchstens 60 Gewichtsteile eines flüssigen Weichmachers pro hundert Teile festem Elastomer und höchstens 30 Gewichtsteile Füllstoffe pro hundert Teile festem Elastomer.

11. Luftreifen (10A-10D) nach einem der Ansprüche 7 bis 10, wobei die Dicke (E1) der ersten Schicht axial variabel ist und die Dicke eines axialen Endabschnitts (PE) der ersten Schicht (56) vorzugsweise größer ist als die Dicke eines axial zentralen Abschnitts (PC) der ersten Schicht (56).

12. Luftreifen (10A-10D) nach einem der Ansprüche 7 bis 11, wobei die Dicke (E2) der zweiten Schicht axial variabel ist und die Dicke eines axialen Endabschnitts (PE) der zweiten Schicht (58) vorzugsweise geringer ist als die Dicke eines axial zentralen Abschnitts (PC) der zweiten Schicht (58).

13. Luftreifen (10A-10D) nach einem der Ansprüche 7 bis 12, wobei die Dicke (E1) der ersten Schicht (56) geringer oder gleich der Dicke (E2) der zweiten Schicht (58) ist, vorzugsweise auf einem axial zentralen Abschnitt des Luftreifens und weiter bevorzugt auf mindestens 50% der axialen Abmessung der zweiten Schicht (58).

14. Luftreifen (10A-10D) nach einem der vorhergehenden Ansprüche, wobei der Indikator für die Kriechbeständigkeit eine Mooney-Viskositätsmessung ist, die mit einem Rotor vom Typ L bei 60°C durchgeführt wird, und wobei die Schwankungsamplitude des Indikators (I1, 12) für die Kriechbeständigkeit in der selbstabdichtenden Schicht (54) zwischen 3 und 25 Mooney-Einheiten (ME) beträgt.

15. Luftreifen (10A-10D) nach Anspruch 14, wobei die Schwankungsamplitude des Indikators (I1, 12) für die Kriechbeständigkeit in der selbstabdichtenden Schicht (54) zwischen 5 und 20 Mooney-Einheiten (ME) beträgt.

16. Verfahren zur Herstellung eines Rohlings eines Luftreifens (10A-10D), **dadurch gekennzeichnet, dass**:
- eine Schicht (54) aus mindestens einem selbstabdichtenden Produkt (O1, 02), die sogenannte selbstabdichtende Schicht, auf einer Oberfläche einer Reifenbautrommel aufgebracht wird, wobei die selbstabdichtende Schicht (54) einen Indikator (I1, 12) für die Kriechbeständigkeit aufweist, der zur Außenseite des Rohlings hin radial abnimmt,
- eine innere Abdichtungsschicht (40) in Kontakt mit der selbstabdichtenden Schicht (54) aufgebracht wird (O1, 02).

17. Verfahren nach dem vorhergehenden Anspruch, wobei:
- eine erste Schicht (56) eines ersten selbstabdichtenden Produkts (O1) auf der Oberfläche der Reifenbautrommel aufgebracht wird,
- eine zweite Schicht (58) eines zweiten selbstabdichtenden Produkts (02), das sich vom ersten selbstabdichtenden Produkt unterscheidet, auf der ersten Schicht aufgebracht wird, und
- die innere Abdichtungsschicht (40) in Kontakt mit der zweiten Schicht (58) aufgebracht wird.

## Claims

1. Pneumatic tyre (10A-10D) comprising an internal sealing layer (40) partially delimiting the internal volume (V) of the pneumatic tyre, **characterized in that** it comprises a layer (54) of at least one self-sealing product (O1, 02), known as the self-sealing layer, positioned radially on the inside with respect to the internal sealing layer (40), the self-sealing layer (54) having a resistance-to-flow indicator (11, 12) that decreases radially towards the outside of the pneumatic tyre (10A-10D).

2. Pneumatic tyre (10A-10D) according to Claim 1, in which each self-sealing product (O1, 02) comprises at least one diene elastomer by way of predominant elastomer, between 20 and 90 parts by weight per hundred parts of solid rubber of a hydrocarbon resin, at most 60 parts by weight per hundred parts of solid rubber of a liquid plasticizer the glass transition temperature of which is below -10°C, and at most 60 parts by weight per hundred parts of solid rubber of fillers.

3. Pneumatic tyre (10A-10D) according to Claim 2, in which the liquid plasticizer content in the self-sealing layer (54) is at a maximum in a radially outer portion (58) of the self-sealing layer (54) and at a minimum in a radially inner portion (56) of the self-sealing layer (54), at least over an axial portion (L3) of the self-sealing layer (54) that is centred axially about the median plane (M) of the pneumatic tyre (10A-10D).

4. Pneumatic tyre (10A-10D) according to Claim 3, in which the radial variation in liquid plasticizer content in the self-sealing layer (54) is greater than 5 parts per hundred parts of solid rubber.

5. Pneumatic tyre (10A-10D) according to any one of Claims 2 to 4, in which the fillers content in the self-sealing layer (54) is at a minimum in a radially outer portion (58) of the self-sealing layer (54) and at a maximum in a radially inner portion (56) of the self-sealing layer (54), at least over an axial portion (L3) of the self-sealing layer (54) that is centred axially about the median plane (M) of the pneumatic tyre (10A-10D).

6. Pneumatic tyre (10A-10D) according to any one of the preceding claims, in which each self-sealing product (O1, 02) further comprises a cross linking system and in which the cross linking system content in the self-sealing layer (54) is at a minimum in a radially outer portion (58) of the self-sealing layer (54) and at a maximum in the radially inner portion (56) of the self-sealing layer (54), at least over an axial portion (L3) of the self-sealing layer (54) that is centred axially about the median plane (M) of the pneumatic tyre (10A-10D).

7. Pneumatic tyre (10A-10D) according to any one of the preceding claims, in which the self-sealing layer (54) comprises first and second layers (56, 58) respectively of first and second distinct self-sealing products (O1, 02), in which the first layer (56) is positioned radially on the inside with respect to the second layer (58) and in which the first self-sealing product (O1) has a resistance-to-flow indicator (I1) greater than a resistance-to-flow indicator (12) of the second self-sealing product (02).

8. Pneumatic tyre (10A-10D) according to the preceding claims, in which the first layer (56) extends axially on the outside beyond the second layer (58).

9. Pneumatic tyre (10A-10D) according to Claim 7 or 8, in which the first self-sealing product (O1) comprises between 20 and 70 parts by weight of a hydrocarbon resin per hundred parts of solid rubber, at most 20 parts by weight of a liquid plasticizer per hundred parts of solid rubber and at most 60 parts by weight of fillers per hundred parts of solid rubber.

10. Pneumatic tyre (10A-10D) according to any one of Claims 7 to 9, in which the second self-sealing product (02) comprises between 30 and 90 parts by weight of a hydrocarbon resin per hundred parts of solid rubber, at most 60 parts by weight of a liquid plasticizer per hundred parts of solid rubber, and at most 30 parts by weight of fillers per hundred parts of solid rubber.

11. Pneumatic tyre (10A-10D) according to any one of Claims 7 to 10, in which the thickness (E1) of the first layer is axially variable and, for preference, the thickness of an axial end portion (PE) of the first layer (56) is less than the thickness of an axially central portion (PC) of the first layer (56).

12. Pneumatic tyre (10A-10D) according to any one of Claims 7 to 11, in which the thickness (E2) of the second layer is axially variable and, for preference, the thickness of an axial end portion (PE) of the second layer (58) is greater than the thickness of an axially central portion (PC) of the second layer (58).

13. Pneumatic tyre (10A-10D) according to any one of claims 7 to 12, in which the thickness (E1) of the first layer (56) is less than or equal to the thickness (E2) of the second layer (58); for preference over an axially central portion of the pneumatic tyre and, more preferably still, over at least 50% of the axial dimension of the second layer (58).

14. Pneumatic tyre (10A-10D) according to any one of the preceding claims, in which the resistance-to-flow indicator is a Mooney viscosity measurement effected using an L-type rotor at 60°C, and in which the amplitude by which the resistance-to-flow indicator (11, 12) in the self-sealing layer (54) varies is between 3 and 25 Mooney units (UM).

15. Pneumatic tyre (10A-10D) according to Claim 14, in which the amplitude by which the resistance-to-flow indicator (11, 12) in the self-sealing layer (54) varies is between 5 and 20 Mooney units (UM).

16. Method of manufacturing a green pneumatic tyre (10A-10D), **characterized in that**:
- one layer (54) of at least one self-sealing product (O1, 02), known as the self-sealing layer, is applied to a surface of a tyre-building drum, the self-sealing layer (54) having a resistance-to-flow indicator (11, 12) that decreases radially towards the outside of the green tyre,
- an internal sealing layer (40) is applied in contact with the self-sealing (O1, 02) layer (54).

17. Method according to the preceding claim, in which:
- a first layer (56) of a first self-sealing product (O1) is applied to the surface of the tyre-building drum,
- a second layer (58) of a second self-sealing product (02) distinct from the first self-sealing product, is applied to the first layer, and
- the internal sealing layer (40) is applied in contact with the second layer (58).
